# FASCICULE DE BREVET EUROPEEN

(11) **EP 0 675 297 B1**
(45) Date de publication et mention de la délivrance du brevet: **09.01.2002**
(21) Numéro de dépôt: 95108901.0
(22) Date de dépôt: 14.10.1992
(51) Int. Cl.: F16D 43/09, F16H 61/02

(54) **Embrayage automatique, ainsi que dispositif de transmission automatique et procédé de commande s'y rapportant**
Automatische Kupplung mit dazugehörigem automatischem Getriebe und Steuerungsverfahren
Automatic clutch with associated automatic transmission device and control method

(30) Priorité: 18.10.1991 FR 9112887
(43) Date de publication de la demande: 04.10.1995
(62) Demande divisionnaire de: 92923832.7
(73) Titulaire: ANTONOV AUTOMOTIVE TECHNOLOGIES B.V., 3013 AL Rotterdam (NL)
(72) Inventeur: Antonov, Roumen, F-75008 Paris (FR)
(74) Mandataire: Pontet, Bernard

(56) Documents cités:
- WO-A-91/13275
- US-A- 2 140 690
- US-A- 2 201 848
- US-A- 2 261 106
- US-A- 5 033 598

## Description

La présente invention concerne un embrayage automatique, par exemple un embrayage du type commandant un changement de rapport dans un dispositif de transmission automatique, notamment pour véhicule motorisé terrestre.

La présente invention concerne également un tel dispositif de transmission automatique, ainsi qu'un procédé de commande d'un embrayage automatique dans un dispositif de transmission automatique.

Dans les dispositifs de transmission automatique, on utilise fréquemment des embrayages, notamment de type multidisques à bain d'huile, qui sont commandés par des moyens de serrage. Selon que l'embrayage est serré ou non par les moyens de serrage, une combinaison d'engrenages, telle qu'un train épicycloïdal, fonctionne selon un premier rapport de transmission ou selon un second rapport de transmission.

Dans les transmissions automatiques classiques, les moyens de serrage sont des vérins qui font brusquement passer l'embrayage de l'état serré à l'état de désaccouplement total. Ceci permet des commandes rapides mais nécessite une hydraulique de puissance complexe, commandée par un circuit de pilotage hydraulique ou électronique, fonctionnant avec divers capteurs. Avec un supplément de complexité, on sait offrir à l'utilisateur d'une transmission automatique traditionnelle la possibilité d'effectuer des commandes manuelles, ou de modifier le comportement automatique de la transmission.

Les demandes de brevet français FR 2662483 et FR 2668231, montrent l'intérêt des transmissions dans lesquelles au moins un embrayage est actionné par une force qui est directement produite à l'intérieur de la transmission et qui a une valeur qui, au moins dans certains cas de fonctionnement, est une fonction monotone d'un paramètre qui est déterminant pour le choix du rapport de transmission, par exemple la vitesse de rotation d'un composant de la boîte de vitesses ou encore le couple transmis par un composant de la boîte de vitesses.

Avec de tels moyens de serrage, l'embrayage est plus ou moins serré selon les conditions de fonctionnement. Le changement de rapport s'effectue lorsque, à partir d'un état d'adhérence, l'embrayage se met à patiner car il n'est plus capable de transmettre le couple qui est nécessaire pour maintenir ses deux éléments à la même vitesse, ou au contraire lorsque, à partir d'un état de patinage, l'embrayage passe à l'état d'adhérence car la force de serrage qui lui est appliquée est devenue suffisante pour que les forces de frottement entre les disques produisent ledit couple.

De tels embrayages automatiques permettent de supprimer la très complexe et très coûteuse hydraulique de commande et de puissance que l'on trouve dans les boîtes de vitesses automatiques traditionnelles. Mais il se pose le problème de pouvoir altérer le fonctionnement automatique de l'embrayage et en particulier effectuer des commandes manuelles lorsqu'on souhaite, dans certaines situations, un changement de rapport alors que le fonctionnement normal spontané de l'embrayage conduirait au maintien du rapport en service.

On connaît certes d'après le US-A-5 033 598 un dispositif hydraulique qui neutralise sélectivement une partie des masselottes centrifuges d'un embrayage de démarrage pendant la phase de démarrage d'un véhicule, pour rendre le démarrage plus progressif.

On connaît encore d'après le US-A-4 576 269 un dispositif dans lequel on ajoute dans un embrayage automatique une force de commande pour altérer les conditions de fonctionnement de l'embrayage par rapport aux conditions de fonctionnement automatique, qui résultent de l'action de masselottes centrifuges et de l'action contraire d'un ressort de rappel.

Le dispositif connu utilise un embrayage conique, dont l'état d'adhérence ou de glissement résulte de la position relative des éléments de friction, davantage que de la force qui leur est appliquée. Ainsi, les risques d'apparition d'états intermédiaires dangereux sont amoindris. Mais les embrayages coniques sont très peu progressifs et donc peu appropriés aux commandes automatiques. En outre, les changements d'état risquent d'être nombreux lorsque la vitesse des masselottes fluctue autour de celle correspondant au changement d'état. Par ailleurs, la force de commande à appliquer pour combattre l'effet des masselottes prend des valeurs très élevées.

Le US-A-2 201 848 qui montre les caractéristiques du préambule de la revendication 1 ou 22, décrit une transmission comprenant un surmultiplicateur automatique dans lequel des moyens générateurs d'efforts comprenant des masselottes, des ressorts et un agencement exploitant la réaction d'une denture hélicoïdale, provoquent d'une part le desserrage d'un embrayage à friction et d'autre part l'immobilisation d'une roue planétaire pour faire passer un train planétaire d'un état de prise directe à un état de surmultiplication. Un aménagement particulier des masselottes produit un effet d'hysterésis qui est tel que le passage de la prise directe à la surmultiplication a lieu aux environs de 55mph (25m/s) alors que le changement inverse s'effectue pour 50mph (23m/s). Le US-A-2 261 106 décrit des dispositions semblables. Le fonctionnement automatique de telles transmission est une fonction immuable des forces qui viennent d'être énumérées.

Le but de l'invention est de proposer un procédé, un embrayage et une transmission permettant d'initier de manière très rapide des changements d'état d'un embrayage et respectivement des changements de rapport dans une transmission, sans avoir à mettre en oeuvre des forces de commande élevées et sans que les changements d'état de l'embrayage se multiplient inutilement.

Suivant un premier aspect de l'invention, l'embrayage comprenant :
- au moins un premier et un second disque de friction qui sont respectivement liés en rotation avec un premier et un second organe rotatif ;
- des moyens de serrage pour sélectivement appliquer sous une force variable les disques de friction en contact de friction mutuel, de façon à commander l'embrayage entre un état de glissement et un état d'adhérence;
- des moyens générateurs d'effort pour appliquer aux moyens de serrage une première composante de force d'actionnement qui est sensiblement continue au moins quand l'embrayage est dans l'état d'adhérence, pour maintenir l'embrayage dans l'état d'adhérence; et
- des moyens d'hystérésis pour faire varier un paramètre de fonctionnement de l'embrayage dans un sens favorisant le maintien de l'état de glissement lorsque l'embrayage passe de l'état d'adhérence à l'état de glissement, et dans un sens contraire favorisant le maintien de l'état d'adhérence lorsque l'embrayage passe de l'état de glissement à l'état d'adhérence;
est caractérisé en ce qu'il comprend en outre
- des moyens à commande externe pour commander l'application sélective d'une force de commande aux moyens de serrage à titre de seconde composante de force d'actionnement.

Les moyens d'hystérésis peuvent prendre, selon l'invention, deux formes préférentielles pouvant éventuellement se combiner. Selon une première forme, il peut s'agir du choix d'un embrayage tendant dans une certaine plage de forces de serrage pour un couple à transmettre donné, à conserver son état de patinage ou d'adhérence quel qu'il soit.

Selon une autre forme, on peut faire intervenir dans les forces appliquées à l'embrayage une réaction qui n'existe que dans l'un des états de l'embrayage, notamment une réaction axiale d'une denture hélicoïdale qui est plus chargée dans l'un des états de l'embrayage que dans l'autre.

Grâce aux moyens d'hystérésis, chaque changement d'état est stable et durable, les situations où l'embrayage fonctionne en état intermédiaire entre adhérence et glissement sont éliminées, et en outre une force de commande modérée suffit pour établir durablement l'état autre que celui qui aurait résulté de l'automatisme de base de l'embrayage.

Une simple impulsion de force, même si sa durée est très limitée, suffit à effectuer le changement d'état, après quoi le nouvel état sera également conservé, même après disparition de la force impulsionnelle.

Ce procédé peut être mis en oeuvre pour initier et accélérer un processus de changement de rapport dans une transmission automatique, notamment pour véhicule terrestre.

On peut ainsi, par exemple, provoquer très rapidement un changement de rapport lorsque le conducteur du véhicule réclame la pleine puissance du moteur.

Selon un second aspect de l'invention, le dispositif de transmission à changement de rapport automatique à au moins deux rapports de transmission, comprend des éléments de transmission qui sont en relation d'engrènement au moyen de dentures, et un embrayage selon le premier aspect de l'invention, monté pour sélectivement coupler ensemble et désaccoupler l'un de l'autre deux desdits éléments de transmission de façon à déterminer lequel des rapports de transmission est établi.

Selon un troisième aspect de l'invention, le procédé pour commander entre un état de glissement et un état d'adhérence un embrayage monté dans un dispositif de transmission, pour sélectivement permettre à cet embrayage de transmettre un couple par friction, procédé dans lequel on induit une friction variable dans l'embrayage en appliquant à cet embrayage une force d'actionnement variable comprenant une composante d'automatisme de base à laquelle contribue une force de réaction (FAC) qui est produite dans le dispositif de transmission et varie dans une direction de relâchement de l'embrayage lorsque l'embrayage passe de l'état d'adhérence à l'état de glissement et dans une direction de serrage accru de l'embrayage lorsque l'embrayage passe de l'état de glissement à l'état d'adhérence;
est caractérisé en ce que par une commande externe on superpose à la composante d'automatisme de base, en tant qu'autre composante de la force d'actionnement variable, une composante de commande pour sélectivement modifier la force d'actionnement dans un sens favorisant l'un désiré des états de glissement et d'adhérence de l'embrayage.

D'autres particularités et avantages de l'invention ressortiront encore de la description ci-après, relative à des exemples non limitatifs.

Aux dessins annexés :
- la figure 1 est une vue en coupe axiale d'une transmission à embrayage multidisques conforme à l'invention ;
- les figures 2, 4 et 5 sont des vues analogues à la figure 1 mais relatives à trois autres modes de réalisation de la transmission ; et
- la figure 3 montre un détail de la réalisation de la figure 2, vu parallèlement à l'axe de la transmission.

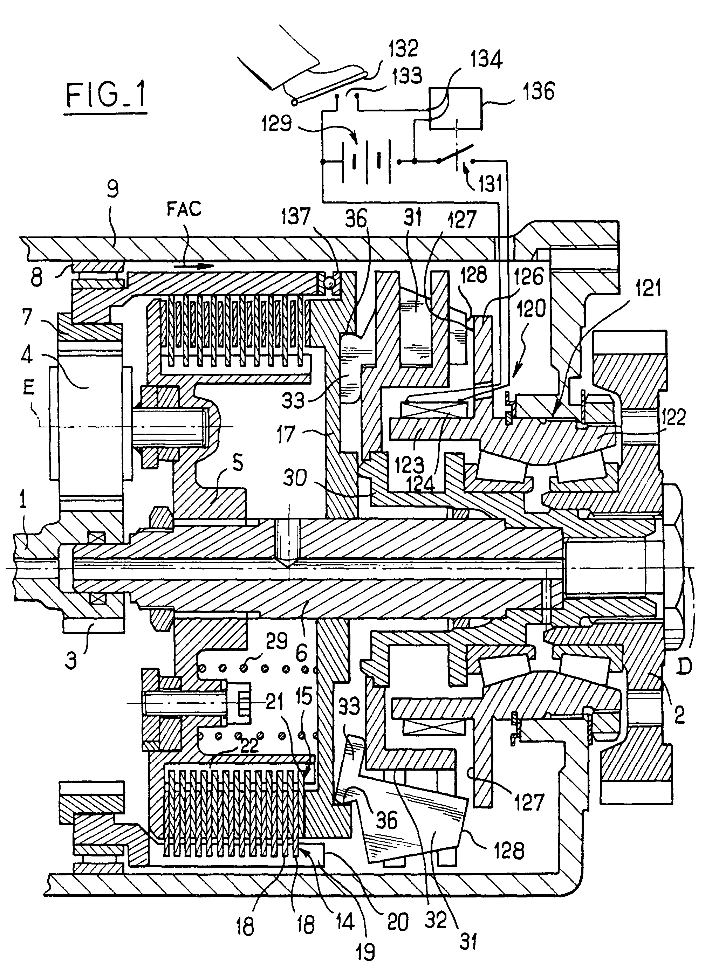

La transmission à changement de rapport automatique représentée à la figure 1 comprend, dans un boîtier 9, une combinaison d'engrenages définissant des rapports de transmission différents entre un arbre d'entrée 1 pouvant être relié au moins indirectement à une source de puissance telle qu'un moteur de véhicule, et une sortie 2 pouvant être accouplée à des roues motrices d'un véhicule par l'intermédiaire d'autres moyens de transmission non représentés.

Dans l'exemple représenté à la figure 1, la combinaison d'engrenages comprend un train planétaire - encore appelé train épicycloïdal-. Un pignon planétaire 3 est lié rigidement à l'arbre d'entrée 1 de façon à être entraîné en rotation par celui-ci. Le planétaire 3 engrène avec des satellites 4 montés libres en rotation sur un porte-satellites 5. Ce dernier est solidaire d'un arbre central 6 relié à la sortie 2 et ayant même axe de rotation D que l'arbre d'entrée 1. On peut par exemple prévoir trois satellites 4 (dont un seul est représenté à la figure 1) montés pivotants selon trois axes E répartis autour de l'axe D.

La denture des satellites 4 engrène en outre avec la denture intérieure d'une couronne 7, également centrée et mobile en rotation autour de l'axe D.

De façon connue, le rapport de transmission. entre l'entrée 1 et la sortie 2 dépend des couplages mécaniques qui s'exercent entre les éléments rotatifs (planétaire 3, porte-satellites 5 et couronne 7) du train planétaire. Dans l'exemple représenté, ces couplages mécaniques sont appliqués sélectivement entre le porte-satellites 5 et la couronne 7. Une roue libre 8, montée entre le boîtier fixe 9 de la transmission et le bord extérieur de la couronne 7, empêche la couronne 7 de tourner en sens inverse de l'arbre d'entrée 1.

Un embrayage multidisques est monté entre la couronne 7 et le porte-satellites 5 pour assurer le couplage sélectif entre ces deux éléments rotatifs. Cet embrayage comprend un empilement de disques 14, 15 axialement coulissants.

Des premiers disques 14 de l'empilement sont liés en rotation à la couronne 7. A cet effet, ces disques 14 présentent sur leur bord extérieur des dents extérieures 18 reçues dans des cannelures intérieures 19 de la couronne 7 parallèles à l'axe D. Ces cannelures 19 sont à fond ouvert. Elles sont définies entre des doigts 20 faisant partie de la couronne 7.

Des seconds disques 15 de l'empilement, qui alternent avec les premiers disques 14, sont liés en rotation au porte-satellites 5. A cet effet, ces seconds disques 15 présentent sur leur bord intérieur des dents intérieures 21 reçues dans des cannelures extérieures 22 du porte-satellites 5, parallèles à l'axe D. Ces cannelures 22 permettent le coulissement axial des disques 15 relativement au porte-satellites 5.

L'empilement de disques 14, 15 peut être serré sélectivement par un mécanisme monté sur l'arbre central 6. Ce mécanisme comprend un poussoir de serrage 17 en forme de plaque, des ressorts de rappel 29 (dont un seul est représenté), répartis autour de l'arbre 6, des masselottes centrifuges 31 et un support de masselottes 30. Le support 30 est lié rigidement à l'arbre central 6, tandis que le poussoir de serrage 17, interposé axialement entre le support 30 et l'empilement de disques 14, 15, est lié en rotation à cet arbre 6, mais avec liberté de coulissement axial.

La périphérie de la surface du poussoir de serrage 17 est en contact avec le disque 14 ou 15 (15 dans l'exemple) formant une extrémité de l'empilement, tandis que le disque formant l'autre extrémité de l'empilement est en contact avec le porte-satellites 5. Ainsi, lorsque le poussoir de serrage 17 est poussé axialement vers le porte-satellites 5 avec une force suffisante, l'empilement de disques 14, 15 est serré et la couronne 7 et le porte-satellites 5 sont accouplés. Les ressorts de rappel 29 sont montés entre le porte-satellites 5 et le poussoir de serrage 17. La force exercée par ces ressorts 29 tend à pousser axialement le poussoir de serrage 17 en l'éloignant du porte-satellites 5, et donc à desserrer l'empilement de disques 14, 15.

Chaque masselotte 31 a un bec 33 dont une région ayant une composante de déplacement axial est appuyée contre le poussoir 17. Le bec 33 a une fonction de came définissant l'écartement du poussoir 17 par rapport au support 30, qui est fixe axialement par rapport au porte-satellites 5. Par ailleurs, les masselottes 31 sont entraînées en rotation à la vitesse de la sortie 2 et appliquent donc au poussoir 17, à partir du moment où la force des ressorts 29 est vaincue, une poussée qui est une fonction monotone croissante de la vitesse de rotation de la sortie 2.

Pour une vitesse de rotation nulle ou faible du porte-satellites 5 et de son arbre 6, les masselottes 31 occupent, sous l'action des ressorts 29 repoussant le poussoir 17, la position de repos représentée à la partie supérieure de la figure 1, au fond de leurs fentes respectives 32. Lorsque cette vitesse de rotation augmente, les masselottes 31 s'écartent de leur position de repos sous l'action de la force centrifuge. Les becs 33 des masselottes étant retenus par un rebord 36 formé à la périphérie du poussoir 17, les masselottes 31 pivotent comme représenté à la partie inférieure de la figure 1. Du fait de ce pivotement, les becs 33, dont la région appuyée sur le poussoir 17 a une composante de déplacement axial, écartent axialement le poussoir 17 du support 30. Comme le support 30 est lié rigidement à l'arbre central 6, le poussoir de serrage 17 est poussé vers le porte-satellites 5, à l'encontre des ressorts de rappel 29.

Ainsi, à partir d'une certaine vitesse de rotation du porte-satellites 5, la force centrifuge qui prend naissance dans les masselottes 31 permet à celles-ci de se soulever (comme représenté en bas de la figure 1) et de pousser le poussoir 17 contre l'empilement de disques à l'encontre de l'action des ressorts de rappel 29.

La différence entre la force axiale produite par les masselottes 31 sur le poussoir 17 et la force contraire produite sur le même poussoir 17 par les ressorts 29 constitue une force de serrage de l'empilement de disques 14, 15.

En fonction du couple auquel est soumis l'arbre d'entrée 1, cette force de serrage va être suffisante ou au contraire insuffisante pour solidariser le porte-satellites 5 avec la couronne 7 du train épicycloïdal. Si le couple sur l'arbre d'entrée 1 est relativement faible par rapport à la vitesse de rotation de la sortie 2, la force de serrage sera suffisante, et le porte-satellites 5 sera solidarisé avec la couronne 7. Dans cette situation, les satellites 4 ne peuvent plus rouler sur la couronne 7, et par conséquent ne peuvent plus tourner sur eux-mêmes autour de leur axe E. Par conséquent, les satellites 4 ne roulent pas non plus sur le planétaire 3. Il y a donc solidarisation en rotation entre l'arbre 1 et le porte-satellites 5, et par conséquent prise directe entre l'arbre d'entrée 1 et la sortie 2 de la transmission.

Si au contraire le couple présent sur l'arbre d'entrée 1 est relativement élevé par rapport à la vitesse de rotation du porte-satellites 5, la force de serrage appliquée à l'empilement de disques 14, 15 est insuffisante pour solidariser la couronne 7 et le porte-satellites 5. Dans ce cas, comme le porte-satellites 5 tend à rester immobile sous l'action de la charge à entraîner par la sortie 2, les satellites 4 tendent à se comporter en inverseurs de mouvement, c'est-à-dire à faire tourner la. couronne 7 en sens inverse de la rotation de l'arbre 1. Mais ceci est empêché par la roue libre 8, de sorte que la couronne 7 est alors immobile par rapport au boîtier 9, et le porte-satellites 5 prend une vitesse de rotation qui est intermédiaire entre la vitesse de l'arbre d'entrée 1 et la vitesse nulle de la couronne 7. Dans ce cas, la transmission fonctionne en réducteur de vitesse.

Entre ces deux situations, il y a une situation intermédiaire, dans laquelle le couple sur l'arbre d'entrée 1 a une valeur que l'on peut qualifier de moyenne par rapport à la vitesse de rotation du porte-satellites 5. Ceci correspond à une certaine plage de valeurs de couple sur l'arbre 1 pour une vitesse de rotation donnée du porte-satellites 5, et à une plage de vitesses de rotation du porte-satellites 5 pour chaque valeur de couple sur l'arbre 1. Dans cette situation, l'embrayage 14, 15 tend à conserver l'état dans lequel il se trouve, c'est-à-dire à rester à l'état d'adhérence lorsqu'il est à l'état d'adhérence, et à rester à l'état de patinage lorsqu'il est à l'état de patinage.

Ceci est un avantage de la transmission car ainsi on évite les changements de vitesse répétés lorsque le véhicule évolue au voisinage des conditions correspondant au changement de rapport.

D'un autre côté, on souhaite en général que la transmission, lorsqu'elle change de rapport, le fasse de manière relativement rapide (sans brutalité) et avec le moins de frottement possible entre les disques, car le frottement est générateur de pertes mécaniques, d'échauffement et d'usure.

Par ailleurs encore, on souhaite, dans certaines conditions, que la transmission provoque un changement de rapport rapide au moment d'un brusque changement de la valeur du couple à transmettre. En particulier, lors des dépassements, si la transmission fonctionne en prise directe, on souhaite qu'elle passe instantanément à son fonctionnement en réducteur pour augmenter aussi vite que possible le couple disponible sur la sortie 2.

Conformément à l'invention, pour atteindre ce but, on applique dans les moyens de serrage de l'embrayage, par l'intermédiaire de moyens initiateurs 120, une impulsion de force dans le sens correspondant au changement d'état souhaité de l'embrayage.

Dans l'exemple représenté à la figure 1, l'arbre 6 est supporté en rotation relativement au boîtier 9 par un palier 121 comprenant une bague extérieure 122 qui est fixée au boîtier 9. Pour réaliser les moyens initiateurs 120, cette bague extérieure 122 réalisée en matière ferromagnétique est prolongée par un collet cylindrique 123 dirigé vers le support 30 et autour duquel est enroulé un bobinage 124 ayant pour axe l'axe D. La bague 122 est également réalisée d'une seule pièce avec une collerette ferromagnétique 126, formant pièce polaire, et ayant une face polaire 127.

Lorsque les masselottes 31 sont dans la position de repos représentée en haut de la figure 1, un bord arrière 128 des masselottes se trouve en regard de la face polaire 127.

Au contraire, lorsque les masselottes 31 sont dans la position de travail représentée en bas de la figure 1, le bord 128 des masselottes est décalé radialement vers l'extérieur par rapport à la face polaire 127.

Ainsi, lorsque l'enroulement 124 est alimenté électriquement, il crée dans le collet 123 et la pièce polaire 126 un champ magnétique et ceci fait apparaître sur la face polaire 127 un pôle Nord ou Sud selon la réalisation. Dans ce cas, les masselottes 31, réalisées elles aussi en matière ferromagnétique, si elles sont dans la position de travail représentée en bas de la figure 1, sont attirées par la face polaire 127 vers la position de repos représentée en haut de la figure 1.

Pour l'alimentation de l'enroulement 124, on a relié celui-ci à la batterie d'accumulateurs 129 du véhicule, en série avec un interrupteur 131. Celui-ci est normalement ouvert. Il est toutefois fermé pendant un court instant, par exemple 1 ou 2 secondes, lorsque le conducteur du véhicule appuie fortement sur l'accélérateur 132 et ferme ainsi un contact 133. La fermeture de ce contact fait parvenir la tension de la batterie 129 aux bornes d'entrée 134 d'un relais 136 commandant l'interrupteur 131. Le relais 136 est d'un type qui actionne l'interrupteur 131 à la fermeture pendant le temps voulu (une à deux secondes dans l'exemple) lorsqu'on lui applique un front montant de tension sur ses entrées 134.

Ainsi, lorsque le conducteur appuie fortement sur la pédale d'accélérateur 132, le relais 136 ferme pendant une ou deux secondes l'interrupteur 131 et l'enroulement 124 est alimenté pendant une ou deux secondes. Si à ce moment les masselottes 31 sont en position de travail et font fonctionner l'embrayage en état d'adhérence, les masselottes 31 sont soumises à une force magnétique tendant à les ramener en position de repos. Si cette force magnétique suffit à réduire suffisamment le serrage de l'embrayage pour que le couple à transmettre (qui de son côté a augmenté en raison de l'enfoncement de la pédale d'accélérateur) provoque le patinage de l'embrayage 14, 15, alors la transmission passe automatiquement sur son rapport inférieur correspondant à un fonctionnement en réducteur et le couple disponible sur la sortie 2 est augmenté.

L'ensemble est conçu pour que la force magnétique tendant à ramener les masselottes 31 en position de repos ne suffise pas à desserrer l'embrayage lorsque la vitesse de rotation de la sortie 2 est telle que le fonctionnement en réducteur provoquerait une vitesse de rotation excessive de l'arbre d'entrée 1.

On a représenté dans la moitié supérieure de la figure 1 une variante dans laquelle une butée axiale 137 est montée entre la couronne 7 et le poussoir 17.

De manière classique, les dentures du pignon planétaire 3 des satellites 4 et de la couronne 7 sont de type hélicoïdal. Cela est classique pour supprimer le bruit de fonctionnement des engrenages. On sait que les dentures hélicoïdales produisent, lorsqu'elles travaillent, une poussée axiale sur les pièces portant ces dentures. Par conséquent, la couronne 7, lors du fonctionnement en réducteur, produit une poussée axiale F_{AC} qui est transmise au poussoir 17 par la butée 137 et qui est proportionnelle au couple sur l'arbre d'entrée 1. Par conséquent, plus le couple sur l'arbre d'entrée 1 est élevé et plus la vitesse de rotation du porte-satellites 5 devra être élevée pour que la poussée axiale exercée par les masselottes 31 sur le poussoir 17 arrive à vaincre non seulement la force de rappel des ressorts 29 mais en outre la poussée axiale F_{AC} produite par la denture hélicoïdale de la couronne 7. La force axiale F_{AC} constitue donc, lors du fonctionnement en réducteur, une composante qui croît de manière monotone en fonction du couple sur l'arbre 1 et qui se soustrait à la composante d'origine centrifuge créée par les masselottes 31, et qui est monotone croissante en fonction de la vitesse. Ainsi, lorsque le couple est élevé, on décale vers les vitesses plus élevées le passage du rapport inférieur au rapport supérieur dans la transmission, comme cela est souhaité pour la conduite des véhicules automobiles.

Par contre, lorsque l'embrayage est serré, aucun effort n'est transmis entre la denture des satellites 4 et celle de la couronne 7, et par conséquent la réaction axiale F_{AC} disparaît. C'est-à-dire qu'une fois le rapport supérieur enclenché, il faudra une nette diminution de la vitesse de rotation ou une nette augmentation du couple sur l'arbre 1 pour que la transmission repasse à son rapport inférieur. Dès que la transmission est repassée à son rapport inférieur, la force axiale F_{AC} réapparaît et par conséquent stabilise le fonctionnement sur le rapport inférieur.

En d'autres termes, à chaque changement d'état de l'embrayage, la force axiale F_{AC} varie dans le sens stabilisant le rapport de transmission venant d'être mis en service.

Avec ce perfectionnement, le procédé d'initiation impulsionnel des changements d'état selon l'invention est particulièrement avantageux. Pour provoquer un changement d'état, il suffit en effet de l'initier par une impulsion de force sur les moyens de serrage et une fois que le changement a eu lieu, la poussée axiale F_{AC} stabilise le changement de rapport qui vient d'être effectué.

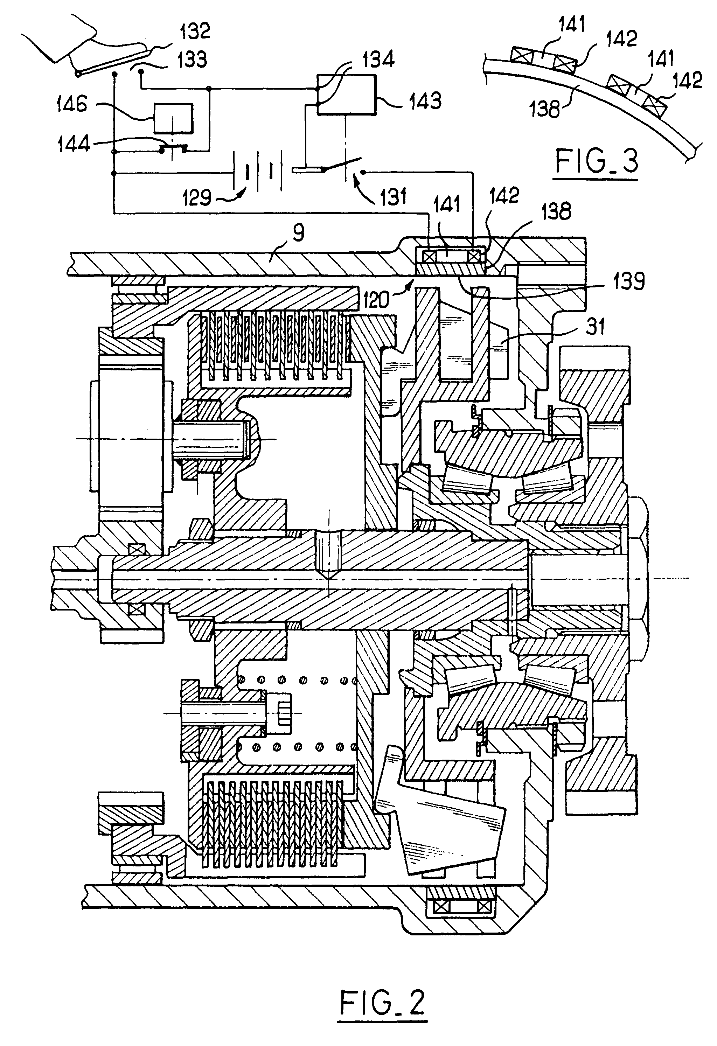

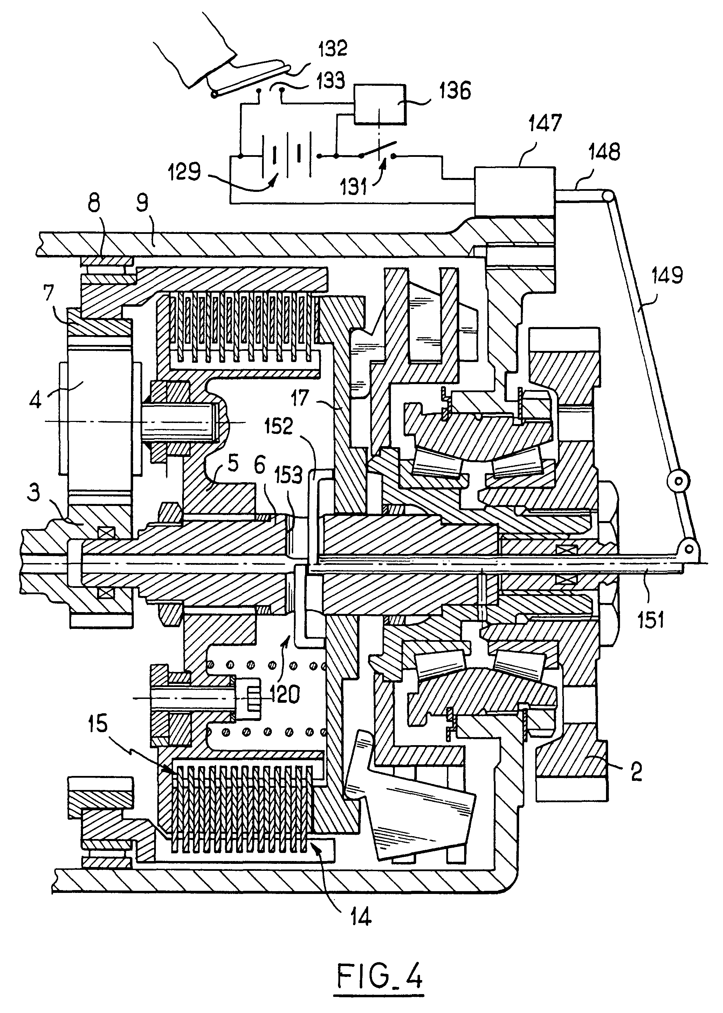

L'exemple des figures 2 et 3 ne sera décrit qu'en ce qui concerne ses différences par rapport à celui de la figure 1.

A la place de l'enroulement 124 et de la pièce polaire 126, on a prévu une pièce polaire annulaire 138 qui est fixée au boîtier 9 autour de l'ensemble des masselottes 31 et dont la face radialement intérieure, de forme générale cylindrique, constitue une face polaire 139 capable d'attirer les masselottes 31 radialement vers l'extérieur pour les faire passer de la position de repos représentée en haut de la figure 3 à la position de travail représentée en bas de la figure 3.

Pour créer le champ magnétique nécessaire dans la pièce polaire 138, celle-ci porte sur sa face radialement extérieure, opposée à la face polaire 139, des noyaux 141 répartis angulairement autour de l'axe D et autour de chacun desquels est formé un bobinage 142.

Le relais 136 de la figure 1 est remplacé par un relais 143 qui provoque une brève fermeture de l'interrupteur 131 lorsqu'il reçoit un front de tension descendant sur ses entrées 134. Le contact 133 de l'accélérateur 132 est monté en parallèle avec un contact 144 qui est normalement fermé mais qui s'ouvre lorsqu'un dispositif tachymétrique 146 relève que la vitesse de rotation de la sortie 2 est inférieure à un certain seuil.

Ainsi, un front de tension descendant arrive aux entrées 134 du relais 143 lorsque l'un ou l'autre des contacts 133 et 144 s'ouvre alors que l'autre est déjà ouvert. Cette situation se produit par exemple lorsque la vitesse tombe en dessous du seuil prédéterminé du dispositif tachymétrique 146 alors que le conducteur n'appuie que faiblement sur la pédale d'accélérateur 132. Dans ce cas, l'interrupteur 131 est brièvement fermé et si les masselottes 31 sont dans la situation représentée en haut de la figure 2, elles vont être attirées radialement vers l'extérieur et par conséquent tendre à passer dans la position représentée en bas de la figure 2, ou encore, si elles sont initialement dans la position du bas de la figure 2, être attirées plus fortement dans cette position, ce qui va augmenter la force de serrage dans l'empilement de disques et, si l'état d'adhérence n'est pas encore réalisé entre eux, réaliser l'état d'adhérence et par conséquent la prise directe dans la transmission.

Si le couple sur l'arbre 1 est trop élevé pour que l'état d'adhérence se réalise malgré le surcroît de serrage assuré par l'impulsion de force électromagnétique, c'est que le passage au rapport supérieur n'est pas souhaitable et la transmission continue avantageusement de fonctionner en réducteur malgré l'impulsion électromagnétique.

L'exemple représenté à la figure 4 ne sera décrit qu'en ce qui concerne ses différences par rapport à celui de la figure 1.

Le montage électrique est le même qu'à la figure 1 mais ce montage alimente par impulsion non plus un électroaimant agissant sur les masselottes, mais un électroaimant 147 agissant sur un noyau plongeur 148 lequel commande par l'intermédiaire d'un levier inverseur 149 une tige de traction 151 mobile axialement à l'intérieur de l'arbre 6. La tige 151 comporte des bras radiaux 152 qui sortent radialement de l'arbre 6 par des lumières 153 de ce dernier pour s'appuyer sur le poussoir 17 et solliciter celui-ci dans le sens du desserrage de l'empilement de disques 14, 15 lorsque l'électroaimant 147 est alimenté.

Par conséquent, lorsque l'électroaimant 147 est alimenté, le poussoir 17 subit une impulsion de force dans le sens du desserrage de l'embrayage et permet le passage du fonctionnement en prise directe au fonctionnement en réducteur dans les mêmes conditions que cela a été décrit à propos de l'électroaimant 123, 124, 126 de la figure 1.

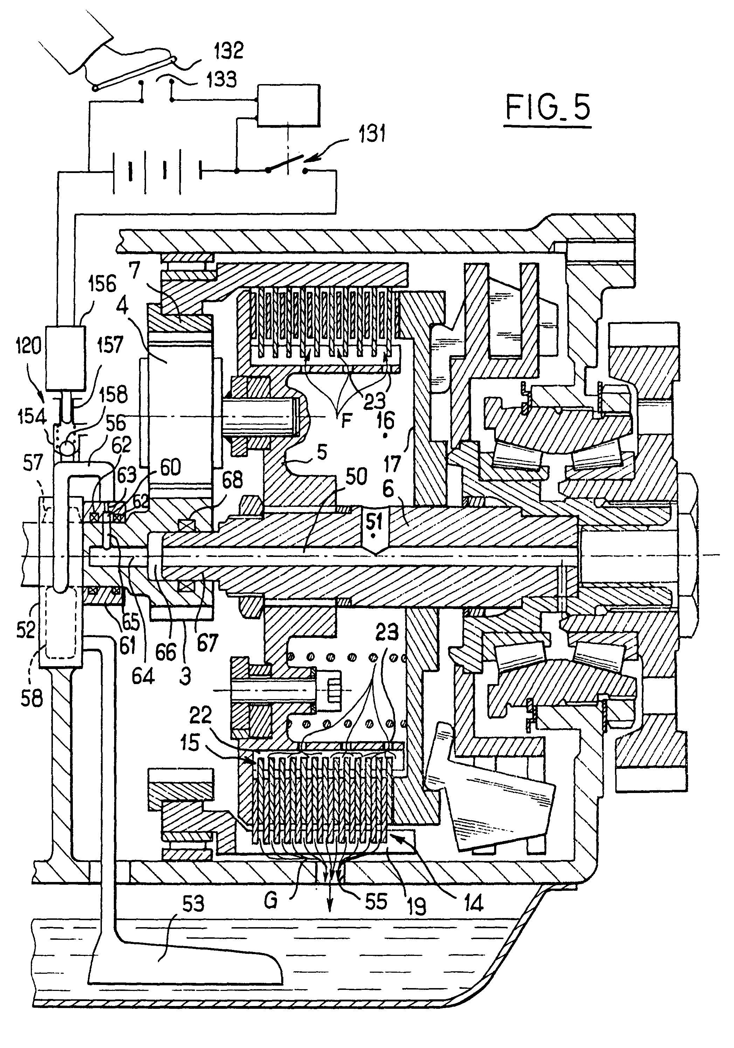

Dans l'exemple de la figure 5, on utilise une pression hydraulique pour créer une impulsion de force.

Le porte-satellites 5 et le poussoir 17 en forme de plaque définissent entre-eux une chambre 16 qui est traversée axialement par l'arbre 6 et qui est fermée périphériquement par l'empilement de disques 14, 15.

L'arbre central 6 comporte un conduit axial 50 et au moins un alésage radial 51 situé à l'endroit où l'arbre central 6 traverse la chambre 16. L'alésage radial 51 s'étend entre la paroi latérale du conduit axial 50 et la chambre 16. Le conduit 50 et l'alésage 51 servent pour injecter de l'huile dans la chambre 16. L'huile ainsi injectée emplit la chambre 16 en s'y écoulant comme l'indiquent schématiquement les flèches F, et elle en sort par des orifices 23 dans les fonds de cannelures 22 ou par l'extrémité axiale libre des cannelures 22, puis par des passages définis par des rainures non représentées prévues en direction sensiblement radiale dans les faces de friction de certains au moins des disques 14 ou 15. Lorsque les disques patinent, l'huile présente dans ces rainures enduit la face de friction adjacente appartenant au disque adjacent, et ceci lubrifie le contact de friction. Ensuite, cette huile passe dans le boîtier 9 à l'extérieur de la couronne 7 à travers le fond ouvert des cannelures 18, comme l'indiquent les flèches G. De là, l'huile retombe dans un carter inférieur 54 par une ouverture 55 du boîtier 9.

Pour alimenter en huile la chambre 16 par l'intermédiaire du conduit 50, on peut prévoir une pompe 52, par exemple à engrenages 57, 58. Dans l'exemple représenté à la figure 5, un collecteur d'huile 53 prélève de l'huile dans le carter inférieur 54. La pompe 52 aspire l'huile recueillie par le collecteur 53 et l'injecte sous pression dans une tubulure de sortie 56. La pompe 52 est entraînée par l'arbre d'entrée 1 de la transmission (l'un des engrenages 57 de la pompe 52 est monté sur l'arbre 1).

La tubulure de sortie 56 de la pompe 52 est raccordée à une chambre annulaire 60 usinée sur la paroi intérieure d'une bague fixe 61 dans laquelle l'arbre d'entrée 1 est monté pivotant. Deux joints 62 assurent l'étanchéité entre l'arbre d'entrée 1 et la bague 61 de part et d'autre de la chambre annulaire 60. Un orifice radial 63 s'étend dans la bague 61 entre la chambre annulaire 60 et le point de raccordement de la tubulure 56 pour admettre l'huile sous pression dans la chambre 60.

Un conduit axial 64 est prévu au voisinage de l'extrémité de l'arbre d'entrée 1 adjacente au planétaire 3. Le conduit axial 64 communique avec la chambre annulaire 60 de la bague 61 par un alésage radial 65. Le conduit axial 64 débouche dans un évidement cylindrique 66 présent à l'extrémité de l'arbre d'entrée 1, au niveau du planétaire 3. L'évidement cylindrique 66 reçoit avec liberté de rotation, un prolongement cylindrique 67 de l'arbre central 6, dans lequel se termine le conduit axial 50 de l'arbre 6. Un joint annulaire 68 assure l'étanchéité entre l'évidement 66 et le prolongement 67.

Ainsi, l'huile sous pression sortant de la pompe 52 parvient à la chambre d'huile 16 de l'embrayage multidisques en passant successivement par la tubulure 56, l'orifice radial 63, la chambre annulaire 60, l'alésage radial 65, le conduit axial 64 de l'arbre d'entrée 1, le conduit axial 50 de l'arbre central 6, et l'alésage radial 51.

Il est en outre prévu un clapet de décharge 154 relié à la tubulure de sortie 56 de la pompe 52. Ce clapet limite normalement la pression fournie par la pompe 52 à la chambre 16 à une valeur de pression prédéterminée.

Un électroaimant 156 à noyau plongeur 157 est monté pour permettre l'ouverture du clapet 154 lorsqu'il n'est pas alimenté, et pour que le noyau plongeur 157 vienne bloquer la bille obturatrice 158 en position de fermeture lorsque l'électroaimant 156 est alimenté. L'électroaimant 156 est relié à un circuit électrique identique à celui de la figure 1, de sorte qu'il est alimenté par une impulsion de une à deux secondes lorsque l'utilisateur presse fortement la pédale d'accélérateur 132. Dans ces conditions, le clapet de décharge 154 ne peut plus s'ouvrir, de sorte que la pompe 52 fournit à la chambre 16 une pression plus élevée pendant le temps d'activation de l'électroaimant 156. Cette pression plus élevée pendant une courte durée s'exerce sur le poussoir 17 et produit donc sur celui-ci une impulsion de force dans le sens du desserrage de l'empilement de disques 14, 15.

En variante, l'agencement avec la butée 137 de la figure 1 pour faire intervenir une poussée axiale variable dans les forces de serrage de l'empilement de disques est applicable aux réalisations des figures 2 à 5.

On pourrait également appliquer l'invention à un embrayage dont les moyens de serrage ne feraient intervenir aucune force centrifuge, mais par exemple uniquement une poussée axiale provenant d'un engrènement de dentures hélicoïdales.

## Revendications

1. Embrayage comprenant :
- au moins un premier (14) et un second (15) disque de friction qui sont respectivement liés en rotation avec un premier (7) et un second (5) organe rotatif;
- des moyens de serrage (17) pour sélectivement appliquer sous une force variable les disques de friction (14, 15) en contact de friction mutuel, de façon à commander l'embrayage entre un état de glissement et un état d'adhérence;
- des moyens générateurs d'effort (29, 31) pour appliquer aux moyens de serrage une première composante de force d'actionnement qui est sensiblement continue au moins quand l'embrayage est dans l'état d'adhérence, pour maintenir l'embrayage dans l'état d'adhérence; et
- des moyens d'hystérésis (137) pour faire varier un paramètre de fonctionnement de l'embrayage dans un sens favorisant le maintien de l'état de glissement lorsque l'embrayage passe de l'état d'adhérence à l'état de glissement, et dans un sens contraire favorisant le maintien de l'état d'adhérence lorsque l'embrayage passe de l'état de glissement à l'état d'adhérence;
**caractérisé en ce qu'**il comprend en outre
- des moyens à commande externe (120) pour commander l'application sélective d'une force de commande aux moyens de serrage à titre de seconde composante de force d'actionnement.

2. Embrayage selon la revendication 1, **caractérisé en ce que** les moyens à commande externe (120) sont capables de commander l'application de la force de commande dans le sens d'un changement d'état de l'embrayage.

3. Embrayage selon la revendication 1 ou 2, **caractérisé en ce que** ledit paramètre est une capacité de transmission de couple de l'embrayage sous la force de serrage appliquée aux moyens de serrage (17) dans la direction de serrage.

4. Embrayage selon la revendication 1 ou 2, **caractérisé en ce que** ledit paramètre est la première composante de force d'actionnement.

5. Embrayage selon l'une quelconque des revendications 1 à 4, **caractérisé en ce que** les moyens à commande externe comprennent des moyens moteurs (123, 124, 126; 148, 141, 142; 147, 148; 52, 57, 58) pour générer la force de commande.

6. Embrayage selon la revendication 5, **caractérisé en ce que** les moyens moteurs sont des moyens à pression de fluide (52, 57, 58).

7. Embrayage selon la revendication 5, **caractérisé en ce que** les moyens moteurs sont des moyens électromagnétiques (123, 124, 126 ; 138, 141, 142 ; 147, 148).

8. Embrayage selon l'une des revendications 5 à 7, **caractérisé en ce qu'**il comprend un couplage mécanique (149, 151, 152) entre les moyens moteurs (147, 148) et les moyens de serrage (17).

9. Embrayage selon la revendication 8, **caractérisé en ce que** le couplage mécanique (149, 151, 152) s'étend à travers un alésage le long d'un arbre central (6) de l'embrayage et s'étend à partir de cet alésage vers les moyens de serrage (17) à travers une ouverture latérale (153) de l'arbre central.

10. Embrayage selon l'une des revendications 1 à 9, **caractérisé en ce que** les moyens générateurs d'effort comprennent des moyens (31) pour appliquer aux moyens de serrage (17) une composante de force continue ayant une valeur indépendante des états d'adhérence et de glissement de l'embrayage.

11. Embrayage selon la revendication 10, **caractérisé en ce que** ladite composante de force continue varie comme une fonction monotone d'un second paramètre au moins dans une plage substantielle prédéterminée des variations du second paramètre.

12. Embrayage selon la revendication 11, **caractérisé en ce que** les moyens générateurs d'effort comprennent, pour produire ladite composante de force continue, des masselottes centrifuges pivotantes (31) possédant une région (33) ayant une composante axiale de déplacement, **en ce que** les moyens de serrage comprennent un poussoir de transmission d'effort (17) sur lequel s'appuient lesdites régions (33) des masselottes (31), et **en ce que** le poussoir reçoit également l'application de la force de commande, de sorte que la composante de force continue et la force de commande sont transmises ensemble, sous la forme d'une résultante de force, aux moyens de serrage (17).

13. Embrayage selon la revendication 7, **caractérisé en ce que** les moyens générateurs d'effort comprennent des masselottes centrifuges (31) et **en ce que** les moyens électromagnétiques comprennent une face polaire (127 ; 139) positionnée pour influencer magnétiquement une partie ferromagnétique des masselottes (31) de façon à appliquer la force de commande aux masselottes centrifuges, de sorte que les deux composantes de force sont transmises ensemble sous la forme d'une force résultante, aux moyens de serrage (17).

14. Embrayage selon la revendication 13, **caractérisé en ce que** la face polaire (127) est formée sur la bague extérieure (122) d'un palier à roulement (121), et **en ce que** les moyens électromagnétiques comprennent en outre un bobinage (124) enroulé autour de la bague extérieure.

15. Embrayage selon la revendication 13, **caractérisé en ce que** les moyens électromagnétiques comprennent un anneau métallique (138) muni sur une face de noyaux (141), des bobinages (142) étant enroulés sur ces noyaux et répartis angulairement autour de l'axe de rotation par rapport auquel les masselottes (31) sont soumises à la force centrifuge.

16. Dispositif de transmission offrant au moins deux rapports de transmission, comprenant des éléments de transmission (3-7) qui sont en relation d'engrènement au moyen de dentures, et un embrayage selon l'une quelconque des revendications 1 à 15 monté pour sélectivement coupler ensemble et désaccoupler l'un de l'autre deux desdits éléments de transmission (3 à 7) de façon à déterminer lequel des rapports de transmission est établi.

17. Dispositif de transmission selon la revendication 16, **caractérisé en ce que** les moyens d'hystérésis (137) de l'embrayage sont adaptés à modifier la première composante de force au moyen d'une composante stabilisatrice (FAC) qui varie dans le sens du relâchement de l'embrayage lorsque l'embrayage passe de l'état d'adhérence à l'état de glissement et dans le sens permettant un serrage accru de l'embrayage lorsque l'embrayage passe de l'état de glissement à l'état d'adhérence.

18. Dispositif de transmission selon la revendication 17, **caractérisé en ce que** les moyens d'hystérésis (137) appliquent aux moyens de serrage, en tant que ladite composante stabilisatrice, une force de réaction (FAC) produite par l'un desdits éléments de transmission (7) qui est différemment chargé selon que l'embrayage est à l'état d'adhérence ou à l'état de glissement.

19. Dispositif de transmission selon la revendication 18, **caractérisé en ce que** la force de réaction (FAC) est produite par engrènement de la denture dudit élément de transmission (7) sous charge.

20. Dispositif de transmission selon la revendication 18, **caractérisé en ce que** la force de réaction (FAC) est produite en direction axiale par engrènement de la denture hélicoïdale dudit élément de transmission (7) sous charge.

21. Dispositif de transmission selon l'une quelconque des revendications 17 à 20, **caractérisé en ce que** les moyens générateurs de force (31) sont adaptés pour fournir comme première composante de force précitée, une force centrifuge ayant une valeur dépendant d'une vitesse de rotation dans le dispositif de transmission et pour appliquer ladite force centrifuge aux moyens de serrage (17) dans le sens du serrage de l'embrayage, et **en ce que** les moyens d'hystérésis (137) appliquent la composante stabilisatrice aux moyens de serrage dans le sens du relâchement de l'embrayage de façon à s'opposer de manière variable à la force centrifuge.

22. Procédé pour commander entre un état de glissement et un état de d'adhérence un embrayage monté dans un dispositif de transmission, pour sélectivement permettre à cet embrayage de transmettre un couple par friction, procédé dans lequel on induit une friction variable dans l'embrayage en appliquant à cet embrayage une force d'actionnement variable comprenant une composante d'automatisme de base à laquelle contribue une force de réaction (FAC) qui est produite dans le dispositif de transmission et varie dans une direction de relâchement de l'embrayage lorsque l'embrayage passe de l'état d'adhérence à l'état de glissement et dans une direction de serrage accru de l'embrayage lorsque l'embrayage passe de l'état de glissement à l'état d'adhérence;
**caractérisé en ce que** par une commande externe on superpose à la composante d'automatisme de base, en tant qu'autre composante de la force d'actionnement variable, une composante de commande pour sélectivement modifier la force d'actionnement dans un sens favorisant l'un désiré des états de glissement et d'adhérence de l'embrayage.

23. Procédé selon la revendication 22, **caractérisé en ce qu'**il est appliqué à un embrayage monté pour déterminer lequel de deux rapports de transmission différents est produit par le dispositif de transmission.

## Patentansprüche

1. Kupplung, welche folgendes aufweist:
- mindestens eine erste (14) und eine zweite (15) Reibscheibe, welche jeweils mit einem ersten (7) und einem zweiten (5) Drehorgan drehverbunden sind;
- Andrückmittel (17), welche dazu bestimmt sind, wahlweise die in gegenseitigem Reibkontakt befindlichen Reibscheiben (14, 15) einer variablen Kraft auszusetzen;
- Krafterzeugungsmittel (29, 31), welche dazu bestimmt sind, auf die Andrückmittel eine erste Bedienungs-Kraftkomponente einwirken zu lassen, die, um die Kupplung im Haftzustand zu halten, im wesentlichen zumindest dann kontinuierlich ist, wenn die Kupplung sich im Haftzustand befindet;
- Hysteresemittel, welche dazu bestimmt sind, einen Betriebsparameter der Kupplung derart zu verändern, dass der Gleitzustand aufrecht erhalten bleibt, wenn die Kupplung vom Haftzustand zum Gleitzustand überwechselt und entgegengesetzt, wodurch die Aufrechterhaltung des Haftzustandes begünstigt wird, wenn die Kupplung vom Gleitzustand zum Haftzustand überwechselt;
**dadurch gekennzeichnet, dass** die Kupplung außerdem folgendes aufweist:
- externe Bedienungsmittel (120) welche dazu bestimmt sind, die wahlweise Einwirkung einer Bedienungskraft durch Andrücken als zweite Bedienungs-Kraftkomponente zu steuern.

2. Kupplung gemäß Anspruch 1, **dadurch gekennzeichnet, dass** die externen Bedienungsmittel (120) in der Lage sind, die Einwirkung der Bedienungskraft im Sinne einer Änderung des Kupplungszustandes zu steuern.

3. Kupplung gemäß Anspruch 1 oder 2, **dadurch gekennzeichnet, dass** der besagte Parameter eine Fähigkeit ist, das Drehmoment der Kupplung zu übertragen unter der Einwirkung der Andrückkraft, welche in Andrückrichtung auf die Andrückmittel einwirkt.

4. Kupplung gemäß Anspruch 1 oder 2, **dadurch gekennzeichnet, dass** der besagte Parameter die erste Komponente der Bedienungskraft ist.

5. Kupplung gemäß irgendeiner der Ansprüche 1 bis 4, **dadurch gekennzeichnet, dass** die externen Bedienungsmittel Antriebsmittel (123, 124, 126; 148, 141, 142; 147, 148; 52, 57, 58) aufweisen, welche dazu bestimmt sind, die Bedienungskraft zu erzeugen.

6. Kupplung gemäß Anspruch 5, **dadurch gekennzeichnet, dass** die Antriebsmittel Flüssigkeitsdruck-Mittel (52, 57, 58) sind.

7. Kupplung gemäß Anspruch 5, **dadurch gekennzeichnet, dass** die Antriebsmittel elektromagnetische Mittel (123, 124, 126; 148, 141, 142; 147, 148) sind.

8. Kupplung gemäß einem der Ansprüche 5 bis 7, **dadurch gekennzeichnet, dass** sie eine mechanische Kupplung (149, 151, 152) zwischen den Antriebsmitteln (147, 148) und den Andrückmitteln (17) aufweist.

9. Kupplung gemäß Anspruch 8, **dadurch gekennzeichnet, dass** die mechanische Kupplung (149, 151, 152) sich durch eine Bohrung entlang einer Zentralwelle (6) der Kupplung und ab dieser Bohrung zu den Andrückmitteln (17) hin durch eine seitliche Öffnung (153) der Zentralwelle erstreckt.

10. Kupplung gemäß einem der Ansprüche 1 bis 9, **dadurch gekennzeichnet, dass** die Krafterzeugungsmittel Mittel (31) aufweisen, welche dazu bestimmt sind, eine kontinuierliche, einen vom Haft- und Gleitzustand der Kupplung unabhängigen Wert aufweisende Kraftkomponente auf die Andrückmittel (17) einwirken zu lassen.

11. Kupplung gemäß Anspruch 10, **dadurch gekennzeichnet, dass** die besagte kontinuierliche Kraftkomponente sich wie eine stetige Funktion eines zweiten Parameters zumindest in einem vorbestimmten wesentlichen Bereich der Änderungen des zweiten Parameters verändern.

12. Kupplung gemäß Anspruch 11, **dadurch gekennzeichnet, dass** die Krafterzeugungsmittel zur Erzeugung der besagten kontinuierlichen Kraftkomponente sich drehende Keile aufweisen welche einen eine axiale Bewegungskomponente aufweisenden Bereich (33) besitzen, dass die Andrückmittel einen Kraftübertragungsdrücker (17) aufweisen, auf den sich die besagten Bereiche (33) der Keile (31) abstützen und dass der Drücker ebenfalls die Bedienungskraft aufnimmt, derart, dass die kontinuierliche Kraftkomponente und die Bedienungskraft zusammen in der Form einer resultierenden Kraft auf die Andrückmittel (17) übertragen werden.

13. Kupplung gemäß Anspruch 7, **dadurch gekennzeichnet, dass** die Krafterzeugungsmittel Keile (31) aufweisen und dass die elektromagnetischen Mittel eine derart positionnierte polare Seite (127; 139) aufweisen, dass ein ferromagnetischer Teil der Keile magnetisch beeinflusst wird, so dass die zwei Kraftkomponenten zusammen in der Form einer resultierenden Kraft auf die Andrückmittel (17) uebertragen werden.

14. Kupplung gemäß Anspruch 13, **dadurch gekennzeichnet, dass** die polare Seite (127) auf dem Aussenring (122) eines Wälzlagers (121) ausgebildet ist und dass die elektromagnetischen Mittel ausserdem eine um den Aussenring gewickelte Wicklung (124) aufweisen.

15. Kupplung gemäß Anspruch 13, **dadurch gekennzeichnet, dass** die elektromagnetischen Mittel einen metallischen Ring (138) aufweisen, der auf einer Seite mit Kernen (141) versehen ist, wobei Wicklungen (142) auf diese Kerne aufgewickelt und rechtwinklig zur und um die Drehachse, in bezug auf welche die Keile (31) der Zentrifugalkraft ausgesetzt sind, verteilt sind.

16. Übersetzungsvorrichtung, welche mindestens zwei Übersetzungsverhältnisse bietet, und welche Organe der Kraftübertragung (3-7) aufweist die sich mit Hilfe von Verzahnungen in Eingriffsverhältnis befinden, und eine Kupplung nach irgendeiner der Ansprüche 1 bis 15, welche so eingebaut ist, um wahlweise zwei der besagten Kraftübertragungsorgane (3 bis 7) zusammenzukuppeln und voneinander abzukuppeln, um zu bestimmen, welches der Übersetzungsverhältnisse hergestellt ist.

17. Übersetzungsvorrichtung gemäß Anspruch 16, **dadurch gekennzeichnet, dass** die Hysteresemittel (137) der Kupplung dazu angepasst sind, die erste Kraftkomponente mit Hilfe einer stabilisierenden Komponente (FAC) zu verändern, welche sich in Richtung des Loslassens der Kupplung ändert, sobald die Kupplung vom Haftungszustand zum Gleitzustand übergeht und in die Richtung, welche ein erhöhtes Andrücken der Kupplung erlaubt, sobald die Kupplung vom Gleitzustand zum Haftzustand übergeht.

18. Übersetzungsvorrichtung gemäß Anspruch 16, **dadurch gekennzeichnet, dass** die Hysteresemittel (137) auf die Andrückmittel als sogenannte stabilisierende Komponente eine Reaktionskraft (FAC) einwirken lassen, welche durch eines der besagten Übertragungsorgane (7), welches unterschiedlich beaufschlagt ist, je nachdem ob die Kupplung sich im Haftzustand oder im Gleitzustand befindet, erzeugt wird.

19. Übersetzungsvorrichtung gemäß Anspruch 18, **dadurch gekennzeichnet, dass** die Reaktionskraft (FAC) durch Eingreifen der Verzahnung des besagten belasteten Übertragungsorgans (7) erzeugt wird.

20. Übersetzungsvorrichtung gemäß Anspruch 18, **dadurch gekennzeichnet, dass** die Reaktionskraft (FAC) in Axialrichtung durch Eingreifen der Spiralverzahnung des besagten belasteten Übertragungsorgans (7) erzeugt wird.

21. Übersetzungsvorrichtung gemäß irgendeinem der Ansprüche 17 bis 20, **dadurch gekennzeichnet, dass** die Krafterzeugungsmittel (31) so angepasst sind, dass sie als erste vorgenannte Kraftkomponente eine Zentrifugalkraft liefern, welche einen von der Drehgeschwindigkeit in der Übersetzungsvorrichtung abhängigen Wert aufweist und dass sie die genannte Zentrifugalkraft mit Hilfe der Andrückmittel (17) in Richtung des Andrückens der Kupplung einwirken lassen und dadurch, dass die Hysteresemittel (137) die stabilisierende Komponente auf die Andrückmittel in Richtung des Loslassens der Kupplung einwirken lassen um veränderlich der Zentrifugalkraft entgegenzuwirken

22. Verfahren zur Steuerung einer in einer Übersetzungsvorrichtung eingebauten Kupplung zwischen einem Gleitzustand und einem Haftzustand, dazu bestimmt, dass es dieser Kupplung ermöglicht wird, ein Drehmoment durch Reibung zu übertragen, Verfahren, in dem man eine veränderliche Reibung in eine Kupplung einleitet , indem man auf diese Kupplung eine veränderliche Betätigungskraft einwirken lässt, welche als Basis eine Automatikkomponente aufweist zu der eine Reaktionskraft (FAC) hinzukommt, welche in der Übersetzungsvorrichtung erzeugt wird und sich verändert in einer Loslassrichtung der Kupplung sobald die Kupplung vom Haftzustand in den Gleitzustand übergeht und in einer Richtung erhöhten Andrückens sobald die Kupplung vom Gleitzustand in den Haftzustand übergeht;
**dadurch gekennzeichnet, dass** man durch externe Bedienung zu der Basis-Automatikkomponente als andere veränderliche Komponente der Betätigungskraft eine Bedienungskomponente hinzufügt, um wahlweise die Betätigungskraft in dem Sinne zu verändern, dass einer der gewünschten Zustände, das heisst Gleit- bzw. Haftzustand, begünstigt wird.

23. Verfahren gemäß Anspruch 22, **dadurch gekennzeichnet, dass** es angewandt wird auf eine eingebaute Kupplung, um zu bestimmen, welches der beiden verschiedenen Übersetzungsverhältnisse von der Übersetzungsvorrichtung erzeugt worden ist.

## Claims

1. A clutch comprising :
- at least a first (14) and a second (15) friction disk which are connected for common rotation with a first (7) and a second (5) rotatable member, respectively ;
- clamping means (17) for selectively engageing the friction disks (14,15) into mutual frictional contact under a variable force, so as to control the clutch between a slip condition and grip condition ;
- force generation means (29,31) for applying to the clamping means a first actuating force component which is substantially continuous at least when the clutch is in the grip condition ; and
- hysteresis means (137) for varying an operating parameter of the clutch in a direction towards maintaining the slip condition when the clutch changes from the grip condition to the slip condition, and in a contrary direction towards maintaining the grip condition when the clutch changes from the slip condition to the grip condition ;
**characterized by** furthermore comprising :
- external control means (120) for controlling selective application of a control force to the clamping means as a second actuating force component.

2. A clutch according to claim 1, **characterized in that** the external control means (120) are capable of controlling application of the control force in the direction towards change of condition of the clutch.

3. A clutch according to claim 1 or 2, **characterized in that** said parameter is a torque transmission capability of the clutch under the clamping force applied onto the clamping means (17) in the direction of clamping.

4. A clutch according to claim 1 or 2, **characterized in that** said parameter is the first actuating force component.

5. A clutch according to anyone of claims 1 to 4, **characterized in that** the external control means comprise motor means (123,124,126 ;148,141,142 ;147,148 ;52,57,58) for generating the control force.

6. A clutch according to claim 5, **characterized in that** the motor means are fluid pressure means (52,57,58).

7. A clutch according to claim 5, **characterized by** the motor means being electromagnetic means (123,124,126 ;148,141,142 ;147,148).

8. A clutch according to anyone of claims 5 to 7, **characterized by** comprising a mechanical coupling (149,151,152) between the motor means (147,148) and the clamping means (17).

9. A clutch according to claim 8, **characterized in that** the mechanical coupling (149,151,152) extends through a bore along a central shaft (6) of the clutch and extends from said bore towards the clamping means (17) through a side opening (153) of the central shaft.

10. A clutch according to anyone of claims 1 to 9, **characterized in that** the force generation means comprise means (31) for applying to the clamping means (17) a continuous force component having a value independent from the grip and slip conditions of the clutch.

11. A clutch according to claim 10, **characterized in that** said continuous force component varies as a monotonous function of a second parameter, at least in a predetermined substantial range of the variations of the second parameter.

12. A clutch according to claim 11, **characterized in that** for producing said continuous force component, the force generation means comprise pivotal flyweights (31) having a region (33) with an axial component of movement, **in that** the clamping means comprise a force transmission pusher (17) which is engaged by said regions (33) of the flyweights (31), and **in that** the pusher is also subjected to the control force, whereby the continuous force component and the control force are transmitted together in the form of a resultant force to the clamping means (17).

13. A clutch according to claim 7, **characterized in that** the force generation means comprise pivotal flyweights (31) and **in that** the electromagnetic means comprise a polar face (127 ;139) which is positioned for magnetically influencing a ferromagnetic portion of the flyweights (31) so as to apply the control force to the flyweights, whereby both force components are transmitted together in the form of a resultant force to the clamping means (17).

14. A clutch according to claim 13, **characterized in that** the polar face (127) is formed on the external race (122) of a roll bearing (121), and **in that** the electromagnetic means furthermore comprise a coil (124) wound around the external race.

15. A clutch according to claim 13, **characterized in that** the electromagnetic means comprise a metal ring (138) which is provided with cores (141) on one face, coils (142) being wound on said cores and angularly distributed about the rotation axis with respect to which the flyweights (31) are subjected to the centrafugal force.

16. A transmission device providing at least two transmission ratios, comprising transmission elements (3-7) which are in meshing relationship by means of teeth, and a clutch according to anyone of claims 1-15 mounted for selectively coupling together and uncoupling from one another two of said transmission elements (3-7) thereby to determine which one of the transmission ratios is establishted.

17. A transmission device according to claim 16, **characterized in that** the hysteresis means (137) of the clutch are adapted to modify the first force component by means of a stabilising component (FAC) which varies in the direction of releasing the clutch when the clutch changes from the grip condition to the slip condition and in the direction allowing increased engagement of the clutch when the clutch changes from the slip condition to the grip condition.

18. A transmission device according to claim 17, **characterized in that** the hysteresis means (137) apply to the clamping means, as said stabilising component, a reaction force (FAC) produced by one of said transmission elements (7) which is differently loaded according to whether the clutch is in the grip condition or in the slip condition.

19. A transmission device according to claim 18, **characterized in that** the reaction force (FAC) is produced by meshing of the teeth of said transmission element (7) under load.

20. A transmission device according to claim 18, **characterized in that** the reaction force (FAC) is produced in an axial direction by meshing of the helical teeth of said transmission element (7) under load.

21. A transmission device according to anyone of claims 17-20, **characterized in that** the force generation means (31) are adapted to provide as said first force component a centrifugal force having a value depending on a rotation speed in the transmission device and for applying said centrifugal force to the clamping means (17) in the direction of engagement of the clutch, and **in that** the hysteresis means (137) apply a stabilising component to the clamping means in the direction of release of the clutch thereby to variably oppose the centrifugal force.

22. A method for controlling between the slip condition and the grip condition a clutch mounted in a transmission device, for selectively allowing said clutch frictionnally to transmit a torque, wherein a variable friction is induced in the clutch by applying to the clutch a variable actuating force comprising a basic automatism component in turn comprising a reaction force (FAC) which is produced in the transmission device and varies in a direction of release of the clutch when the clutch changes from the grip condition to the slip condition and in a direction of increased engagement of the clutch when the clutch changes from the slip condition to the grip condition ;
charaterized in that, by means of an external control, a control component being another, variable, actuating force component is superimposed to the basic automatism component, for selectively modifying the actuating force in a direction promoting a desired one of the slip and grip conditions of the clutch.

23. A method according to claim 22, charaterized by being applied to a clutch mounted for determining which one of two different transmission ratios is produced by the transmission device.
